# FASCICULE DE BREVET EUROPEEN

(11) **EP 2 996 903 B1**
(45) Date de publication et mention de la délivrance du brevet: **28.11.2018**
(21) Numéro de dépôt: 14723840.6
(22) Date de dépôt: 22.04.2014
(51) Int. Cl.: B60R 9/04

(54) **VÉHICULE AUTOMOBILE ÉQUIPÉ D'UN ENSEMBLE DE BARRES DE TOIT**
KRAFTFAHRZEUG MIT EINER DACHBALKENANORDNUNG
MOTOR VEHICLE EQUIPPED WITH A ROOF-BAR ASSEMBLY

(30) Priorité: 17.05.2013 FR 1354450
(43) Date de publication de la demande: 23.03.2016
(73) Titulaire: PSA Automobiles SA, 78300 Poissy (FR)
(72) Inventeur: SAREH, Benchabane, F-75012 Paris (FR); GESLIN, Patrick, F-91430 Vauhallan (FR); SAINT DENIS, Lionel, F-92290 Chatenay-Malabry (FR); OPPER, Fabien, F-92160 Antony (FR); PODVIN, Christophe, F-78180 Montigny Le Bretonneux (FR); AUBERT, Pascal, F-78140 Velizy Villacoublay (FR)
(74) Mandataire: Fernandez, Francis Lionel
(86) Numéro de dépôt international: PCT/FR2014/050958
(87) Numéro de publication internationale: WO 2014/184458

(56) Documents cités:
- WO-A1-2005/100092
- FR-A1- 2 865 978
- JP-U- H0 616 153
- US-A- 3 856 193

## Description

La présente invention concerne un ensemble comprenant deux barres de toit longitudinales et des moyens pour fixer celles-ci sur les deux côtés d'habitacle d'un véhicule automobile.

Les barres longitudinales connues sont fixées chacune le long de la partie supérieure d'un côté d'habitacle. Le document FR2865978 décrit un ensemble selon le préambule de la revendication 1.

Chacune de ces barres comprend près de son extrémité avant et de son extrémité arrière un pied portant des vis de fixation.

Ces barres de toit connues sont peu esthétiques et s'intègrent mal au style du véhicule.

Par ailleurs, les vis de fixation portées par les pieds des barres de toit sont engagées dans des trous réalisés dans la tôle du côté d'habitacle.

Sur ces vis sont vissés des écrous, ce qui oblige l'opérateur à opérer depuis l'intérieur du véhicule, ce qui n'est pas ergonomique pour cet opérateur.

Le but de la présente invention est de remédier à ces inconvénients.

Ce but est atteint grâce à un ensemble selon la revendication 1.

Les deux barres de toit confèrent ainsi au véhicule un aspect esthétique original et attrayant.

Le premier élément comporte près de son extrémité opposée au second élément, un pied unique destiné à prendre appui sur la partie avant supérieure du côté d'habitacle et dans une zone reliant le premier élément au second élément une surface destinée à prendre appui sur la partie supérieure arrière du côté d'habitacle.

Ce pied unique différentie également les barres de toit selon l'invention de celles connues à ce jour.

De préférence, ledit pied et ladite surface d'appui sont agencés pour maintenir un espacement entre le premier élément et la partie supérieure du côté d'habitacle.

Selon une autre particularité avantageuse de l'invention, le second élément comprend une surface destinée à prendre appui sur la partie arrière inclinée du côté d'habitacle.

Dans un mode de réalisation avantageux de l'invention, lesdits moyens pour fixer chacune des deux barres de toit sur l'un des deux côtés d'habitacle comprennent des trous pour le passage de vis de fixation réalisés dans ledit pied et dans ladite zone où est située ladite surface destinée à prendre appui sur la partie supérieure arrière du côté d'habitacle.

Lesdites vis de fixation sont de préférence destinées à être vissées sur des écrous respectifs soudés sur une plaque de renfort métallique en contact avec la face intérieure de la tôle du côté d'habitacle située en regard dudit pied et de ladite surface.

Ainsi, le monteur n'a pas besoin de pénétrer à l'intérieur du véhicule pour visser les vis de fixation des barres de toit.

De plus, les plaques de renfort évitent tout risque de déformation de la tôle du côté d'habitacle sous l'effet du couple de serrage des vis.

Dans un mode de réalisation également avantageux de l'invention, ladite surface du second élément destinée à prendre appui sur la partie arrière inclinée du côté d'habitacle comprend des pions pouvant s'encliqueter dans des trous respectifs réalisés dans ladite partie arrière inclinée du côté d'habitacle.

Selon d'autres particularités avantageuses de l'invention :
- chacune desdites barres de toit comprend deux capots pour masquer lesdites vis de fixation ;
- le capot servant à masquer les vis de fixation situées dans ladite surface destinée à prendre appui sur la partie supérieure arrière du côté d'habitacle masque la totalité de la face latérale dudit second élément située à l'opposé de celle destinée à prendre appui sur la partie arrière inclinée du côté d'habitacle.

Selon un autre aspect, l'invention concerne également un véhicule automobile équipé d'un ensemble de barres de toit selon l'invention, caractérisé en ce que chacun des deux côtés d'habitacle comprend des surfaces planes embouties dans des zones situées respectivement en regard dudit pied de ladite surface d'appui du premier élément et de ladite surface d'appui du second élément.

D'autres particularités et avantages de l'invention apparaîtront encore tout au long de la description ci-après.

Aux dessins annexés, donnés à titre d'exemples, non limitatifs :
- la figure 1 montre une barre de toit selon l'invention fixée sur la partie supérieure et la partie arrière du côté d'habitacle d'un véhicule automobile,
- la figure 2 est une vue en perspective d'une barre de toit selon l'invention avant sa fixation sur le véhicule,
- la figure 3 est une vue partielle en perspective du côté d'habitacle, montrant la surface d'appui emboutie réalisée pour recevoir le pied avant d'une barre de toit,
- la figure 4 est une vue en perspective d'une plaque de renfort destinée à être placée sous la surface d'appui emboutie représentée sur la figure 3,
- la figure 5 montre la plaque de renfort en position dans le côté d'habitacle,
- la figure 6 montre en perspective le pied avant d'une barre de toit selon l'invention et le capot pour masquer les vis de fixation du pied,
- la figure 7 est une vue en perspective des surfaces d'appui embouties sur la partie arrière du côté d'habitacle,
- la figure 8 est une vue en perspective d'une plaque de renfort destinée à être placée sous la surface emboutie à l'arrière du côté d'habitacle,
- la figure 9 est une vue de l'intérieur du côté d'habitacle et de la plaque de renfort représentée sur la figure 8,
- la figure 10 est une vue en perspective montrant la zone comprise entre l'élément avant et l'élément arrière d'une barre de toit selon l'invention, le capot pour masquer les vis de fixation étant enlevé,
- la figure 11 est une vue en perspective de ce capot,
- la figure 12 est une vue en perspective montrant la face intérieure de l'élément arrière de la barre de toit,
- la figure 13 est une vue en perspective éclatée montrant la partie arrière d'un côté d'habitacle, une barre de toit selon l'invention et le capot arrière de cette dernière.

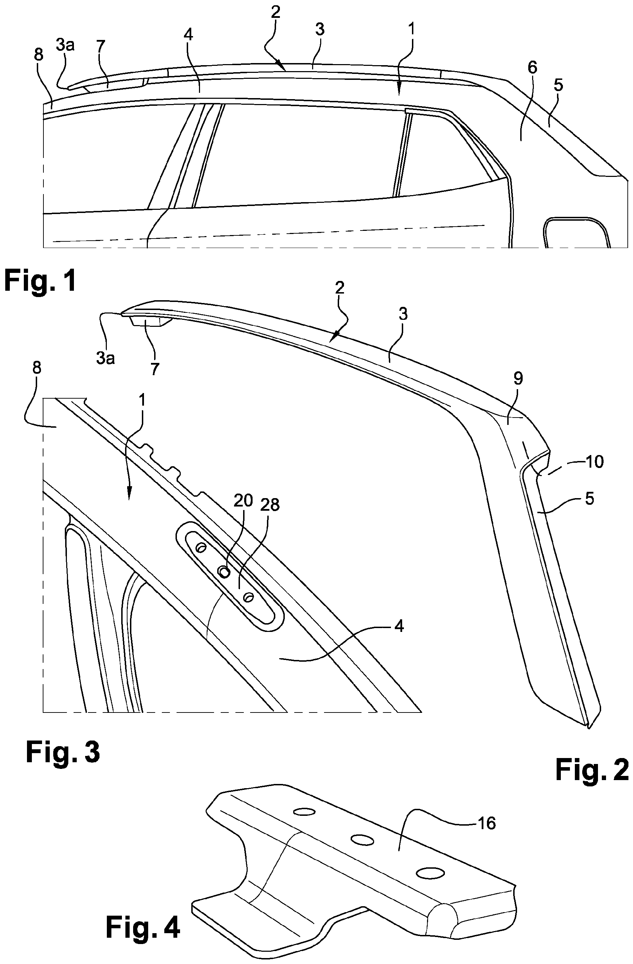

La figure 1 représente une barre de toit 2 en position sur le côté d'habitacle 1 d'un véhicule automobile.

La barre de toit 2 est représentée seule sur la figure 2.

Conformément à l'invention, la barre de toit 2 comprend un premier élément 3 destiné à être fixé longitudinalement sur la partie supérieure 4 du côté d'habitacle 1 et un second élément 5 relié au premier élément 3 et formant un angle obtus avec ce premier élément 3.

Ce second élément 5 est destiné à être fixé sur la partie arrière 6 inclinée vers le bas du côté d'habitacle 1, comme montré sur la figure 1.

L'élément avant 3 de la barre de toit est constitué par un profilé en aluminium.

Le contenu du pied avant 7 et l'élément arrière 5 sont en matière plastique.

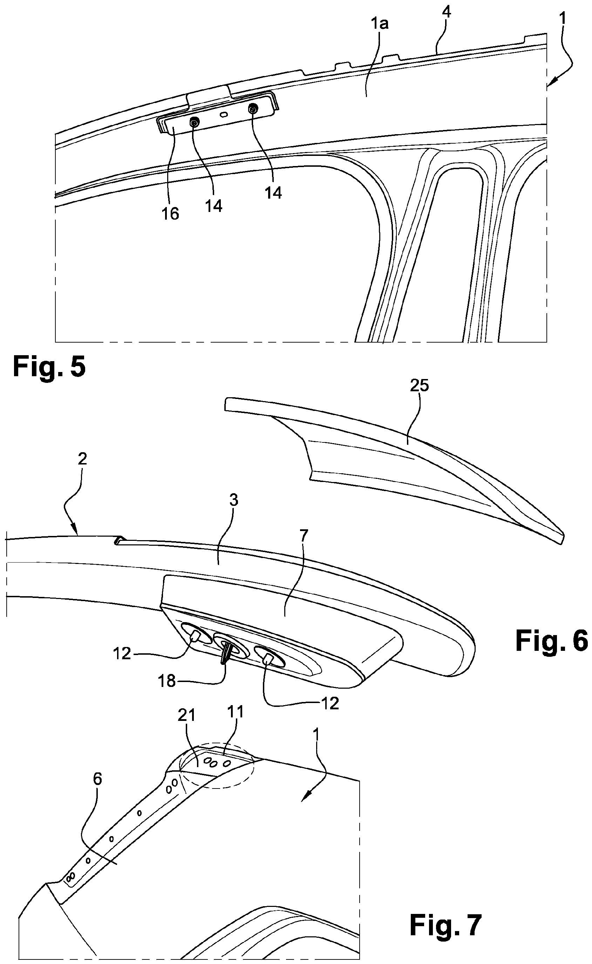

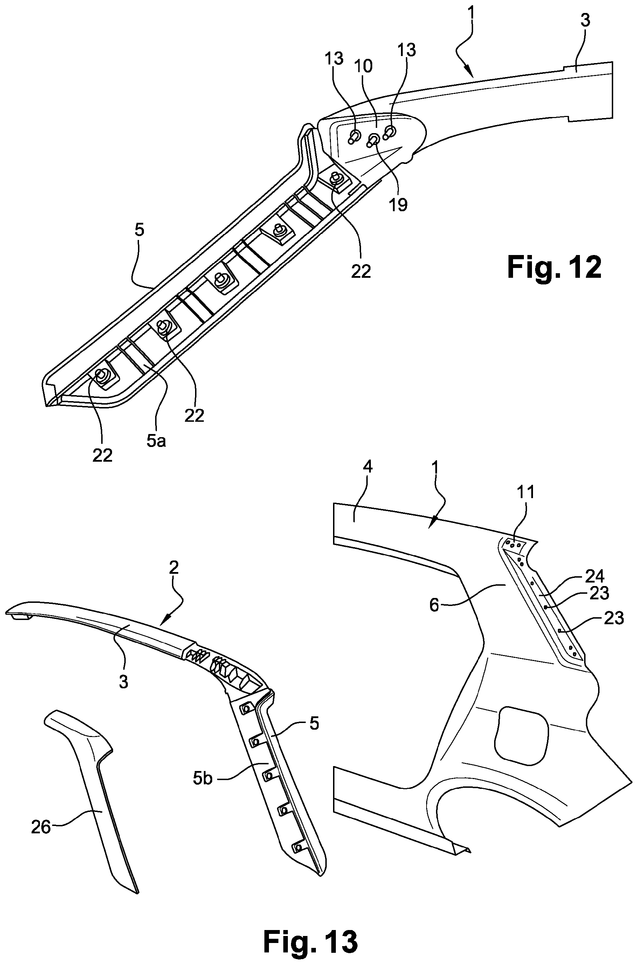

Les figures 1 et 2 montrent que le premier élément 3 comporte près de son extrémité 3a opposée au second élément, un pied unique 7 (voir également la figure 6) destiné à prendre appui sur la partie avant supérieure 8 du côté d'habitacle 1 et dans une zone 9 (voir figures 2 et 12) située entre ce premier élément 3 et le second élément 5 une surface 10 destinée à prendre appui sur la partie supérieure arrière 11 du côté d'habitacle 1 (voir figure 7).

Le pied 7 du premier élément et la surface d'appui 10 sont agencés pour maintenir un espacement entre le premier élément 3 et la partie supérieure 4 du côté d'habitacle 1.

Le second élément 5 comprend, comme montré sur la figure 12, une surface 5a destinée à prendre appui sur la partie arrière inclinée 6 du côté d'habitacle 1.

Les moyens pour fixer chacune des barres de toit 2 sur l'un des deux côtés d'habitacle 1 comprennent des trous pour le passage de vis de fixation réalisés dans le pied 7 et dans la zone où est située la surface 10 destinée à prendre appui sur la partie supérieure arrière 6 du côté d'habitacle 1.

Les vis de fixation 12 traversant le pied avant 7 sont montrées sur la figure 6.

La figure 12 montre les vis de fixation 13 traversant la barre de toit dans une zone située entre l'élément avant 3 et l'élément arrière et faisant saillie sur la surface 10.

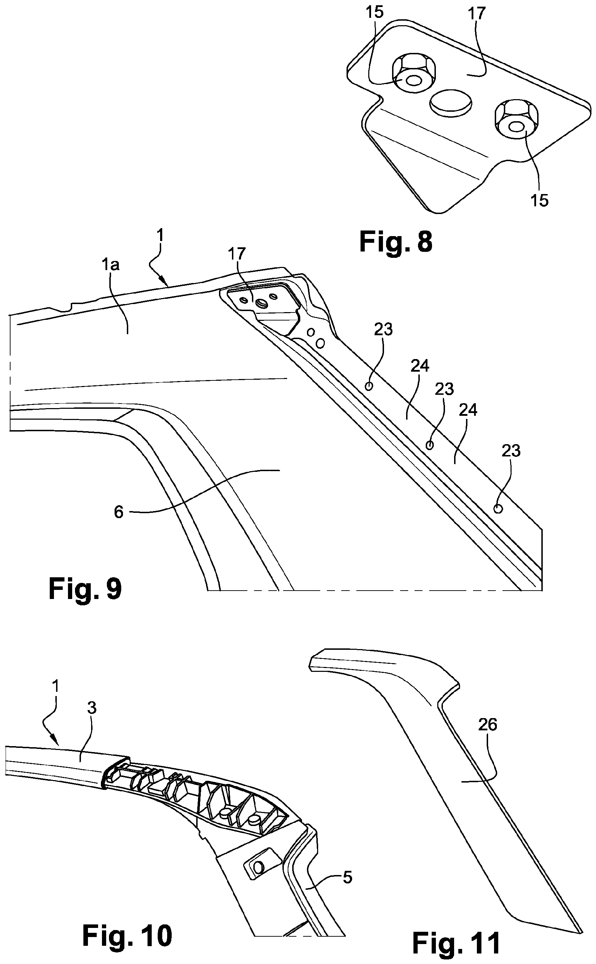

Les vis de fixation 12 et 13 sont destinées à être vissées sur des écrous 14, 15 respectifs soudés sur une plaque de renfort métallique 16, 17 (voir figures 5 et 9) prenant appui sur la face intérieure 1a de la tôle du côté d'habitacle 1 située en regard du pied 7 et de la surface 10 de la barre de toit 2.

Les doigts 18, 19 faisant saillie (voir figure 6) sur la surface du pied 7 entre deux vis 12 et sur la surface 10 (voir figure 12) entre deux vis 13 permettent d'indexer la position de chaque barre de toit 2 par rapport à des trous 20, 21 correspondants réalisés (voir figures 3 et 7) dans le côté d'habitacle 1.

Ces doigts et trous d'indexage permettent ainsi de fixer les barres de toit de façon précise et reproductible.

Par ailleurs, la surface 5a du second élément 5 destiné à prendre appui sur la partie arrière inclinée 6 du côté d'habitacle 1 comprend des pions 22 pouvant s'encliqueter dans des trous respectifs 23 réalisés dans une surface emboutie 24 (voir figure 13) sur la partie arrière inclinée 6 du côté d'habitacle.

Ces pions 22 et ces trous 23 permettent de fixer l'élément arrière 5 sur la partie arrière du côté d'habitacle en respectant les prescriptions sur le plan des jeux et affleurements.

Les figures 6, 11 et 13 montrent en outre que la barre de toit 2 comprend deux capots 25, 26 pour masquer la tête des vis de fixation 12 et 13.

De plus, le capot 26 servant à masquer les vis de fixation 13 traversant (voir figure 12) la surface 10 destinée à prendre appui sur la partie supérieure arrière 8 du côté d'habitacle masque la totalité de la face latérale 5a du second élément située à l'opposé de celle destinée à prendre appui sur la partie arrière inclinée 6 du côté d'habitacle 1.

Chacun des deux côtés d'habitacle 1 a été aménagé pour recevoir le pied avant 7, la surface d'appui 10 située à l'arrière de l'élément avant 3 et la face latérale 5a de l'élément arrière 5.

Ces aménagements sont constitués par des surfaces planes embouties 28, 11, 24 (voir figures 3, 7, 13) dans des zones situées respectivement en regard du pied 7, de la surface d'appui 11 du premier élément 3 et de la surface d'appui 5a du second élément 5.

L'ensemble de chaque barre de toit présente une forme allongée aérodynamique pour engendrer lors du roulage du véhicule la traînée la plus faible possible.

Les principaux avantages de l'invention sont les suivants :
- la présence d'un seul pied à l'avant donne une impression de lévitation qui est particulièrement attrayante,
- la présence d'une partie arrière formant un angle avec la partie avant de la barre présente également un effet visuel particulier et attrayant,
- la fixation des barres de toit selon l'invention est très ergonomique pour l'opérateur, car il n'a pas besoin de pénétrer à l'intérieur du véhicule,
- dans le cas d'un véhicule ayant un volet arrière, chaque élément arrière d'une barre peut longer l'un des bords latéraux du volet et masquer des points de soudure de ce dernier.

## Revendications

1. Ensemble comprenant deux barres de toit (2) longitudinales et des moyens pour fixer celles-ci sur les deux côtés d'habitacle (1) d'un véhicule automobile, chacune des deux barres de toit (2) comprenant un premier élément (3) destiné à être fixé longitudinalement sur la partie supérieure (4) de l'un des deux côtés d'habitacle (1) et un second élément (5) relié au premier élément (3) et formant un angle obtus avec le premier élément (3), ce second élément (5) étant destiné à être fixé sur la partie arrière (6) inclinée vers le bas dudit côté d'habitacle (1) **caractérisé en ce que** le premier élément (3) comporte près de son extrémité opposée au second élément (5), un pied (7) unique destiné à prendre appui sur la partie avant supérieure (8) du côté d'habitacle (1) et dans une zone (9) reliant le premier élément (3) au second élément (5) une surface (10) destinée à prendre appui sur la partie supérieure arrière du côté d'habitacle (1).

2. Ensemble selon la revendication 1, **caractérisé en ce que** ledit pied (7) et ladite surface d'appui (10) sont agencés pour maintenir un espacement entre le premier élément (3) et la partie supérieure du côté d'habitacle (1).

3. Ensemble selon l'une des revendications 1 ou 2, **caractérisé en ce que** le second élément (5) comprend une surface (5a) destinée à prendre appui sur la partie arrière inclinée (6) du côté d'habitacle (1).

4. Ensemble selon l'une des revendications 1 à 3, **caractérisé en ce que** lesdits moyens pour fixer chacune des deux barres de toit (1) sur l'un des deux côtés d'habitacle (1) comprennent des trous pour le passage de vis de fixation (12, 13) réalisés dans ledit pied (7) et dans ladite zone où est située ladite surface (10) destinée à prendre appui sur la partie supérieure arrière (6) du côté d'habitacle (1).

5. Ensemble selon la revendication 4, **caractérisé en ce que** lesdites vis de fixation (12, 13) sont destinées à être vissées sur des écrous respectifs (14, 15) soudés sur une plaque de renfort métallique (16, 17) en contact avec la face intérieure (1a) de la tôle du côté d'habitacle (1) située en regard dudit pied (7) et de ladite surface (10).

6. Ensemble selon l'une des revendications 3 à 5, **caractérisé en ce que** ladite surface (5a) du second élément (5) destinée à prendre appui sur la partie arrière inclinée (6) du côté d'habitacle (1) comprend des pions (22) pouvant s'encliqueter dans des trous respectifs (23) réalisés dans ladite partie arrière inclinée (6) du côté d'habitacle.

7. Ensemble selon l'une des revendications 4 à 6, **caractérisé en ce que** chacune desdites barres de toit (2) comprend deux capots (25, 26) pour masquer lesdites vis de fixation (22, 23).

8. Ensemble selon les revendications 6 et 7, **caractérisé en ce que** le capot (26) servant à masquer les vis de fixation (23) situées dans ladite surface (10) destinée à prendre appui sur la partie supérieure arrière (4) du côté d'habitacle (1) masque la totalité de la face latérale (5b) dudit second élément (5) située à l'opposé de celle destinée à prendre appui sur la partie arrière inclinée (6) du côté d'habitacle.

9. Véhicule automobile équipé d'un ensemble de barres de toit (2) selon l'une des revendications 1 à 8, **caractérisé en ce que** chacun des deux côtés d'habitacle (1) comprend des surfaces planes embouties (28, 11, 24) dans des zones situées respectivement en regard dudit pied (7) de ladite surface d'appui (10) du premier élément (3) et de ladite surface d'appui (5a) du second élément (5).

## Patentansprüche

1. Anordnung, die zwei Längsdachbalken (2) und Mittel zum Befestigen dieser auf den zwei Fahrgastzellenseiten (1) eines Kraftfahrzeugs umfasst, wobei jeder der zwei Dachbalken (2) ein erstes Element (3) umfasst, das dazu bestimmt ist, längs auf dem oberen Teil (4) einer der zwei Fahrgastzellenseiten (1) befestigt zu sein, und ein zweites Element (5), das mit dem ersten Element (3) verbunden ist und einen stumpfen Winkel mit dem ersten Element (3) bildet, wobei dieses zweite Element (5) dazu bestimmt ist, auf dem hinteren Teil (6) befestigt zu sein, der zu der Unterseite der Fahrgastzellenseite (1) geneigt ist, **dadurch gekennzeichnet**, das das erste Element (3) nahe seinem Ende, das dem zweiten Element (5) entgegengesetzt ist, einen einzigen Fuß (7) umfasst, der dazu bestimmt ist, auf dem oberen vorderen Teil (8) der Fahrgastzellenseite (1) zum Aufliegen zu kommen, und in einer Zone (9), die das erste Element (3) mit dem zweiten Element (5) einer Oberfläche (10) verbindet, die dazu bestimmt ist, auf dem oberen hinteren Teil der Fahrgastzellenseite (1) zum Aufliegen zu kommen.

2. Anordnung nach Anspruch 1, **dadurch gekennzeichnet, dass** der Fuß (7) und die Auflageoberfläche (10) eingerichtet sind, um eine Beabstandung zwischen dem ersten Element (3) und dem oberen Teil der Fahrgastzellenseite (1) aufrecht zu erhalten.

3. Anordnung nach einem der Ansprüche 1 oder 2, **dadurch gekennzeichnet, dass** das zweite Element (5) eine Oberfläche (5a) umfasst, die dazu bestimmt ist, auf dem geneigten hinteren Teil (6) der Fahrgastzellenseite (1) zum Aufliegen zu kommen.

4. Anordnung nach einem der Ansprüche 1 bis 3, **dadurch gekennzeichnet, dass** die Mittel zum Befestigen jedes der zwei Dachbalken (1) auf einer der zwei Fahrgastzellenseiten (1) Bohrungen für das Durchgehen von Befestigungsschrauben (12, 13) umfassen, die in dem Fuß (7) und in der Zone, in der sich die Oberfläche (10) befindet, die dazu bestimmt ist, auf dem oberen hinteren Teil (6) der Fahrgastzellenseite (1) zum Aufliegen zu kommen, eingerichtet sind.

5. Anordnung nach Anspruch 4, **dadurch gekennzeichnet, dass** die Befestigungsschrauben (12, 13) dazu bestimmt ist, auf jeweilige Muttern (14, 15) geschraubt zu werden, die auf einer metallischen Verstärkungsplatte (16, 17) in Berührung mit der Innenfläche (1a) des Blechs der Fahrgastzellenseite (1), die gegenüber dem Fuß (7) und der Oberfläche (10) liegt, geschweißt zu werden.

6. Anordnung nach einem der Ansprüche 3 bis 5, **dadurch gekennzeichnet, dass** die Oberfläche (5a) des zweiten Elements (5), die dazu bestimmt ist, auf dem geneigten hinteren Teil (6) der Fahrgastzellenseite (1) zum Aufliegen zu kommen, Zapfen (22) umfasst, die in jeweilige Löcher (23), die in dem hinteren geneigten Teil (6) der Fahrgastzellenseite eingerichtet sind, einzurasten.

7. Anordnung nach einem der Ansprüche 4 bis 6, **dadurch gekennzeichnet, dass** jeder der Dachbalken (2) zwei Hauben (25, 26) zum Verbergen der Befestigungsschrauben (22, 23) umfasst.

8. Anordnung nach den Ansprüchen 6 und 7, **dadurch gekennzeichnet, dass** die Haube (26), die dazu dient, die Befestigungsschrauben (23), die in der Oberfläche (10) liegen, die dazu bestimmt ist, auf dem oberen hinteren Teil (4) der Fahrgastzellenseite (1) zum Aufliegen zu kommen, abzudecken, die gesamte Seitenfläche (5b) des zweiten Elements (5) abdeckt, das derjenigen entgegengesetzt ist, die dazu bestimmt ist, auf dem geneigten hinteren Teil (6) der Fahrgastzellenseite zum Aufliegen zu kommen.

9. Kraftfahrzeug, das mit einer Anordnung aus Dachbalken (2) nach einem der Ansprüche 1 bis 8 ausgestattet ist, **dadurch gekennzeichnet, dass** jede der zwei Fahrgastzellenseiten (1) flache gestanzte Oberflächen (28, 11, 24) in Zonen umfasst, die jeweils gegenüber dem Fuß (7) der Auflageoberfläche (10) des ersten Elements (3) und der Auflageoberfläche (5a) des zweiten Elements (5) liegen.

## Claims

1. An assembly including two longitudinal roof bars (2) and means for fixing the latter on the two sides of the passenger compartment (1) of a motor vehicle, each of the two roof bars (2) including a first element (3) intended to be fixed longitudinally on the upper portion (4) of one of the two sides of the passenger compartment (1) and a second element (5) connected to the first element (3) and forming an obtuse angle with the first element (3), this second element (5) being intended to be fixed on the rear portion (6) inclined towards the bottom of the said side of the passenger compartment (1), **characterized in that** the first element (3) comprises close to its end opposite the second element (5) a single foot (7) intended to rest on the upper front portion (8) of the side of the passenger compartment (1) and in a region (9) connecting the first element (3) to the second element (5) a surface (10) intended to rest on the upper rear portion of the side of the passenger compartment (1).

2. The assembly according to Claim 1, **characterized in that** said foot (7) and said support surface (10) are arranged to maintain a space between the first element (3) and the upper portion of the side of the passenger compartment (1).

3. The assembly according to one of Claims 1 or 2, **characterized in that** the second element (5) includes a surface (5a) intended to rest on the rear inclined portion (6) of the side of the passenger compartment (1).

4. The assembly according to one of Claims 1 to 3, **characterized in that** said means for fixing each of the two roof bars (1) on one of the two sides of the passenger compartment (1) include holes for the passage of fixing screws (12, 13) formed in said foot (7) and in said zone in which said surface (10) is situated, intended to rest on the upper rear portion (6) of the side of the passenger compartment (1).

5. The assembly according to Claim 4, **characterized in that** said fixing screws (12, 13) are intended to be screwed on respective nuts (14, 15) welded on a metal reinforcement plate (16, 17) in contact with the interior face (1a) of the metal sheet of the side of the passenger compartment (1) situated facing said foot (7) and said surface (10).

6. The assembly according to one of Claims 3 to 5, **characterized in that** said surface (5a) of the second element (5) intended to rest on the rear inclined portion (6) of the side of the passenger compartment (1) includes pins (22) being able to be latched into respective holes (23) formed in said inclined rear portion (6) of the side of the passenger compartment.

7. The assembly according to one of Claims 4 to 6, **characterized in that** each of said roof bars (2) includes two covers (25, 26) to mask said fixing screws (22, 23).

8. The assembly according to Claims 6 and 7, **characterized in that** the cover (26) serving to mask the fixing screws (23) situated in said surface (10) intended to rest on the upper rear portion (4) of the side of the passenger compartment (1) masks the entirety of the lateral face (5b) of said second element (5) situated opposite that intended to rest on the inclined rear portion (6) of the side of the passenger compartment.

9. A motor vehicle equipped with a set of roof bars (2) according to one of Claims 1 to 8, **characterized in that** each of the two sides of the passenger compartment (1) includes planar stamped surfaces (28, 11, 24) in zones situated respectively facing said foot (7) of said support surface (10) of the first element (3) and of said support surface (5a) of the second element (5).
